# EUROPÄISCHE PATENTANMELDUNG

(11) **EP 0 911 948 A2**
(43) Veröffentlichungstag der Anmeldung: **28.04.1999**
(21) Anmeldenummer: 98115494.1
(22) Anmeldetag: 18.08.1998
(51) Int. Cl.: H02K 5/24

(54) **Elektrische Grossmaschine**

(30) Priorität: 02.10.1997 DE 19743610
(71) Anmelder: ABB PATENT GmbH, 68309 Mannheim (DE)
(72) Erfinder: Nitschke, Thomas, Dipl.-Ing., 67577 Alsheim (DE)
(74) Vertreter: Miller, Toivo

(57) **Zusammenfassung**

Elektrische Großmaschine (10), insbesondere Turbogenerator, mit einem horizontal angeordneten Einbaustator (14), der in einem Gehäuse verankert ist und mit einem Schallschutz versehen ist, welches Gehäuse über Fundamentanker mit dem Fundament verbunden ist, wobei der Einbaustator (14) unmittelbar mit den Fundamentankern (28) verbunden ist und das Gehäuse als Schallschutzhaube (16) ausgebildet ist, die an der Kraftübertragung nicht beteiligt ist und zur Luftführung dient.

## Beschreibung

Die Erfindung betrifft eine elektrische Großmaschine, insbesondere Turbogenerator, mit einem horizontal angeordneten Einbaustator, der in einem Gehäuse verankert ist und mit einem Schallschutz versehen ist, welches Gehäuse über Fundamentanker mit dem Fundament verbunden ist.

Bei bekannten elektrischen Großmaschinen, insbesondere Turbogeneratoren, wird der zugehörige Stator als sogenannter Einschub- oder Einbaustator gestaltet, der in ein als Schweißkonstruktion ausgeführtes Gehäuse eingebracht wird und darin mittels Schweißverbindung befestigt wird.

Die geschweißten Gehäuse sind aus Blechtafeln gebildet und dienen als Kraftanschlußpunkt zur Befestigung der Großmaschine am zugeordneten Fundament. Entsprechend diesem Zweck besitzen die Gehäuse ein beträchtliches Gewicht, zu welchem das Gewicht des Stators sowie des hierin angeordneten Rotors hinzu-kommt.

Um die infolge der im Betrieb auftretenden Schwingungen verursachte Geräuschbelästigung zu minimieren, sind die Großmaschinen zusätzlich mit einer Geräuschschutzhaube zu versehen, welche das Gehäuse vollständig kapselt.

Problematisch bei dieser Gestaltung ist die unzureichende Steifigkeit des kraftaufnehmenden Gehäuses zwischen dem Einbaustator der Großmaschine und dem Fundament, das heißt die Anbindung des Einbaustators über eine Gehäuseschweißkonstruktion erreicht nicht die Steifigkeit eines betonierten Fundamentes.

Die sich in einer elliptischen Verformung des Stators äußernden Statorschwingungen werden direkt auf das Gehäuse übertragen und regen dieses seinerseits zu Schwingungen an.

Ein anderer Nachteil der bekannten Anordnungen von Großmaschinen betrifft den Transport der Großmaschine sowie die Handhabung der zugehörigen Einzelkomponenten. Die aus Gehäuse und Stator gebildete Baueinheit weist üblicherweise ein Gewicht von ca. 200 t auf und kann nur im komplett montierten Zustand zum jeweiligen Aufstellungsort transportiert werden.

Fertige Einzelkomponenten, wie Rotor, Lager, Erreger und Kühleinrichtung, müssen bis zur Endmontage, das heißt zum endgültigen Einbau, zwischengelagert werden und verursachen hierdurch einen zusätzlichen Aufwand infolge Beanspruchung von Lagerraum und zusätzlichen Werktransport.

Ausgehend von diesem Stand der Technik ist es Aufgabe der Erfindung, eine elektrische Großmaschine der eingangs genannten Art anzugeben, welche einfach gestaltet ist und die zuvor erwähnten Nachteile und Probleme vermeidet.

Diese Aufgabe wird erfindungsgemäß gelöst durch die kennzeichnenden Merkmale des Anspruchs 1. Weitere vorteilhafte Ausgestaltungen und Weiterbildungen der Erfindung sind in den Unteransprüchen gekennzeichnet.

Entsprechend der Erfindung ist daher vorgesehen, daß der Einbaustator der elektrischen Großmaschine direkt auf dem Fundament abgestützt ist.

Entsprechend einer bevorzugten Ausführungsform der elektrischen Großmaschine nach der Erfindung sind am Einbaustator beiderseits diametral gegenüberliegend jeweils entlang einer zur Längsachse des Einbaustators parallelen Mantellinie wenigstens zwei Poller, vorzugsweise beiderseits vier Poller, im Abstand zueinander angeordnet, welche sich auf dem Fundament abstützen und über Fundamentanker mit dem Fundament verbunden sind.

Hierbei ist in Weiterbildung der Erfindung der Abstand der Poller im Hinblick auf das Schwingungsverhalten des Stators im Betrieb optimiert, so daß der Stator in horizontaler Richtung elastisch aufgehängt ist.

Vorteilhafterweise ist die Befestigung des Einbaustators derart vorgesehen, daß jeder Poller lösbar am Stator befestigt ist. Dabei erweist es sich gemäß einer Ausgestaltung der Erfindung als besonders günstig, daß die Poller jeweils einer Seite mit einem gemeinsamen Längsträger verschweißt sind, der sich auf dem Fundament abstützt und an diesem angeschraubt ist.

Entsprechend einer weiteren Ausbildung der erfindungsgemäßen Großmaschine sind im Hinblick auf deren betriebsgerechter Verankerung Stellfüße vorgesehen, die zur Ausrichtung des Einbaustators auf dem Fundament dienen, so daß sich im Betrieb beispielsweise keine zusätzlichen Spannungen überlagern, die aus einer ungenügenden Abstützung resultieren. Demgemäß sind die Stellfüße so angeordnet, daß sie die Fundamentanker gegen das Fundament abstützen und gleichzeitig einen Höhenausgleich für die dazwischengreifenden Befestigungselemente, wie Längsträger oder Poller, ermöglichen.

Eine weitere Ausgestaltung der Erfindung sieht vor, daß das Gehäuse, welches den Stator umgibt, als schallisoliert gestaltete Luftführungshaube ausgebildet ist. Mit anderen Worten, das Gehäuse hat nicht mehr kraftübertragende Funktion zur Festlegung der elektrischen Großmaschine, sondern es dient nur noch als Luftführungshaube, die als Ständerkonstruktion mit doppelschaligen Verkleidungselementen ausgestaltet ist, welche nicht an der Kraftübertragung in das Fundament beteiligt sind.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine Stirnansicht der erfindungsgemäßen Fundamentbefestigung gemäß des Einbaustators und
- Fig. 2: eine ausschnittweise Seitenansicht der Fig. 1.

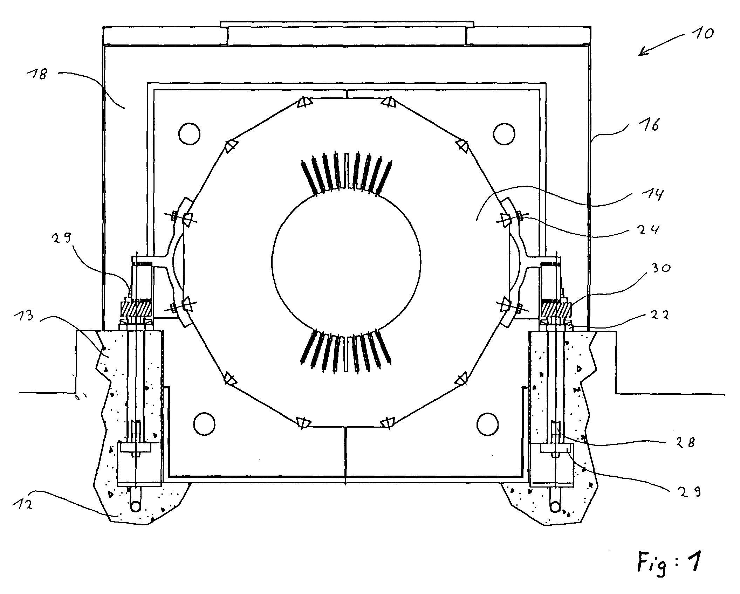

In Fig. 1 ist die Stirnansicht einer elektrischen Großmaschine 10, nämlich eines Turbogenerators, in schematischer Darstellung gezeigt, die auf einem Fundament 12 angeordnet und daran befestigt ist. Dabei wurden nur die für die Befestigung des Einbaustators 14 am Fundament 12 wesentlichen Merkmale dargestellt, während in diesem Zusammenhang unwesentliche Merkmale nicht gezeigt wurden.

Die Großmaschine 10 besitzt einen sogenannten Einbaustator 14, der von einer Schallschutzhaube 16 umgeben ist, welche nicht an der Lastaufnahme beziehungsweise an der Lastübertragung in das Fundament 12 beteiligt ist.

Zwischen dem Einbaustator 14 und dem Längsträger 30 sind im axialen Abstand zueinander pro Seite vier Poller 20 angeordnet, welche kraftschlüssig einerseits mit dem Einbaustator 14 und anderseits mit dem Längsträger 30 verbunden sind und dazu dienen, die auftretenden Kräfte über dargestellte Poller 20 sowie Stellfüße 22 in das Fundament 12 über sogenannte Fundamentblöcke 13 einzuleiten.

Die Befestigung der Poller 20 am Einbaustator 14 erfolgt mittels gleichmäßig an dessen Umfang angeordneten Trapezbolzen 26 sowie in entsprechendem axialen Abstand angeordneter Schrauben 24 mit denen der Poller 20 an dem Einbaustator 14 angeschraubt ist.

Die Schallschutzhaube 16 ist als mehrschalige Platte mit Füllung ausgestaltet, welche den Einbaustator 14 umgibt, und an den Querwänden 18 befestigt. Auf diese Weise kapselt sie den Einbaustator 14 nach außen ab.

Die Befestigung des Einbaustators 14 am Fundament 12 ist mittels in das Fundament 12 geführter Fundamentanker 28 vorgesehen. Diese Fundamentanker 28 sind als Zuganker ausgebildet. Sie durchgreifen den Längsträger 30 und die Stellfüße 22 und sind an beiden Enden jeweils mit Spannmuttern 29 versehen.

Um eine exakte Ausrichtung der elektrischen Großmaschine zu gewährleisten, ist beiderseits des Einbaustators 14 zwischen die Poller 20 und die Fundamentblöcke 22 ein Längsträger 30 zwischengefügt, mit dessen Hilfe die Nivellierung des Einbaustators 14 ohne besondere Probleme erreicht wird. Vorteilhafterweise sind die Poller 20 jeweils an die Längsträger 30 angeschweißt, die ihrerseits zwecks Montagevereinfachung mit dem Einbaustator 14 verbunden sind.

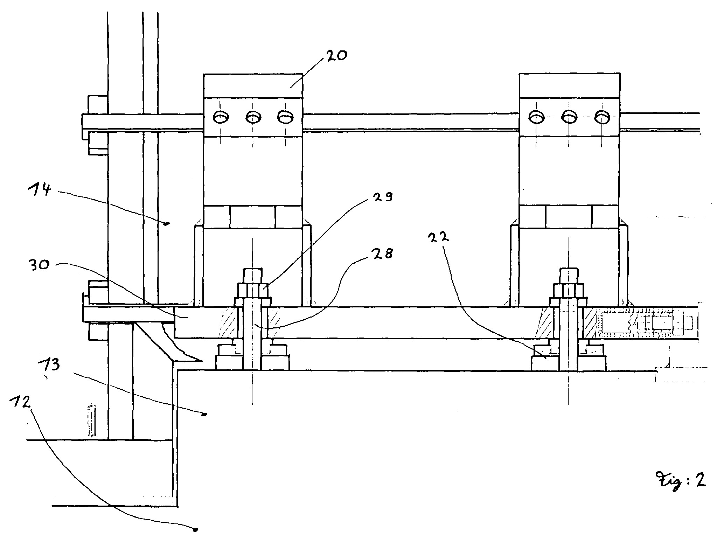

In Fig. 2 ist ausschnittweise ein Querschnitt durch die erfindungsgemäße Großmaschine 10 und deren Befestigung auf einem zum Fundament 12 gehörigen Fundamentblock 13 dargestellt. Ferner ist in Fig. 2 die Ausgestaltung und Befestigung der sogenannten Poller 20 dargestellt.

## Patentansprüche

1. Elektrische Großmaschine (10), insbesondere Turbogenerator, mit einem horizontal angeordneten Einbaustator (14), der in einem Gehäuse verankert ist und mit einem Schallschutz versehen ist, welches Gehäuse über Fundamentanker mit dem Fundament verbunden ist, dadurch gekennzeichnet, daß der Einbaustator (14) unmittelbar mit den Fundamentankern (28) verbunden ist und daß das Gehäuse als Schallschutzhaube (16) ausgebildet ist, die an der Kraftübertragung nicht beteiligt ist und zur Luftführung dient.

2. Elektrische Großmaschine nach Anspruch 1, dadurch gekennzeichnet, daß am Einbaustator (14) beiderseits diametral gegenüberliegend jeweils entlang einer zur Längsachse des Einbaustators (14) parallelen Mantellinie wenigstens zwei Poller (20) im Abstand zueinander angeordnet sind, welche sich über den Längsträger 30 auf dem Fundament (12) abstützen und über Fundamentanker (28) mit dem Fundament (12) verbunden sind.

3. Elektrische Großmaschine nach Anspruch 2, dadurch gekennzeichnet, daß beiderseits vier Poller angeordnet (20) sind.

4. Elektrische Großmaschine nach einem der Ansprüche 2 oder 3, dadurch gekennzeichnet, daß die Dimensionierung der Poller (20) im Hinblick auf das Schwingungsverhalten des Einbaustators (14) im Betrieb optimiert ist.

5. Elektrische Großmaschine nach einem der Ansprüche 2 bis 4, dadurch gekennzeichnet, daß jeder Poller (20) am Einbaustator (14) lösbar befestigt ist.

6. Elektrische Großmaschine nach einem der Ansprüche 2 bis 5, dadurch gekennzeichnet, daß die Poller (20) jeweils einer Seite mit einem gemeinsamen Längsträger (30) verschweißt sind, der sich auf dem Fundament (12) abstützt und an diesem angeschraubt ist.

7. Elektrische Großmaschine nach einem der vorherigen Ansprüche, dadurch gekennzeichnet, daß Stellfüße (22) vorgesehen sind, die zur Ausrichtung des Einbaustators (14) auf dem Fundament (12) dienen.

8. Elektrische Großmaschine nach Anspruch 7, dadurch gekennzeichnet, daß die Stellfüße (22) die Fundamentanker (28) gegen das Fundament (12) abstützen.

9. Elektrische Großmaschine nach einem der vorherigen Ansprüche, dadurch gekennzeichnet, daß das Gehäuse (16), welches den Stator (14) umgibt, als schallisoliert gestaltete Luftführungshaube ausgebildet ist.

10. Elektrische Großmaschine nach Anspruch 9, dadurch gekennzeichnet, daß die Luftführungshaube als Ständerkonstruktion mit doppelschaligen Verkleidungselementen ausgestaltet ist, welche nicht an der Kraftübertragung in das Fundament (12) beteiligt ist.
